# EUROPÄISCHE PATENTSCHRIFT

(11) **EP 1 297 271 B1**
(45) Veröffentlichungstag und Bekanntmachung des Hinweises auf die Patenterteilung: **10.03.2004**
(21) Anmeldenummer: 01967108.0
(22) Anmeldetag: 28.06.2001
(51) Int. Cl.: F16H 47/07, B61C 9/20, B61C 9/34

(54) **HYDRODYNAMISCHES 2-GANG-TURBOGETRIEBE**
HYDRODYNAMIC 2-SPEED TURBINE DRIVE
TURBOTRANSMISSION HYDRODYNAMIQUE A DEUX VITESSES

(30) Priorität: 03.07.2000 DE 10033790
(43) Veröffentlichungstag der Anmeldung: 02.04.2003
(73) Patentinhaber: Voith Turbo GmbH & Co. KG, 89522 Heidenheim (DE)
(72) Erfinder: FISCHER, Wolfgang, 89182 Bernstadt (DE); SCHMÖLZ, Hubert, 89564 Nattheim (DE)
(74) Vertreter: Koch, Annegret Christa
(86) Internationale Anmeldenummer: PCT/EP2001/007443
(87) Internationale Veröffentlichungsnummer: WO 2002/002966

(56) Entgegenhaltungen:
- DE-A- 1 812 606
- DE-A- 3 415 909
- DE-A- 4 307 222
- DE-B- 1 137 754
- FR-A- 894 670
- GB-A- 793 263
- GB-A- 2 067 686

## Beschreibung

Die Erfindung betrifft ein hydrodynamisches Mehrkreislaufgetriebe, insbesondere ein 2-Gang-Turbogetriebe für den Einsatz in Antriebssystemen von Schienenfahrzeugen mit Niederfluranteil, im einzelnen mit den Merkmalen aus dem Oberbegriff des Anspruchs 1; ferner ein Antriebssystem mit einem hydrodynamischen Mehrkreislaufgetriebe und ein Laufwerk eines Schienenfahrzeuges.

Hydrodynamische Mehrkreislaufgetriebe, insbesondere in Form von Turbogetrieben für den Einsatz in Schienenfahrzeugen sind in einer Vielzahl von Ausführungen bekannt. Stellvertretend wird auf
1. DE 43 07 222 A1
2. DE 18 12 606 A
3. DE 34 15 909A
verwiesen. Bei diesen handelt es sich um Getriebe, bei denen die Leistungsübertragung in den einzelnen Gängen über eine Mehrzahl hydrodynamischer Kreisläufe realisiert wird. Unter einem Turbogetriebe wird dabei ein Getriebe verstanden, bei welchem mehrere hydraulische Kreisläufe so kombiniert werden, daß sich deren Nutzungsbereiche ergänzen. Diese Ergänzung kann darin bestehen, daß weitere hydraulische Kreisläufe, beispielsweise hydrodynamische Drehzahl-/Drehmomentwandler oder hydrodynamische Kupplungen den Fahrbereich über den ersten hydraulischen Gang hinaus in Fahrtrichtung erweitern oder auch zur Abbremsung und Beschleunigung in Gegenfahrtrichtung eingesetzt werden. Derartige Getriebe unterscheiden sich entsprechend ihrer Auslegung für eine bestimmte Anzahl an Geschwindigkeitsbereichen hinsichtlich der Art und Anzahl der verwendeten hydrodynamischen Kreisläufe sowie deren Anordnung in Bezug auf die An- beziehungsweise Abtriebswelle der Getriebebaueinheit. Ein gattungsgemäßes hydrodynamisches Mehrkreislaufgetriebe mit zwei Traktions-Arbeitskreisläufen ist aus dem Voith-Druck G 1454, 3.96 bekannt. Das in dieser Druckschrift beschriebene Turbogetriebe ist als ZweigangGetriebe für Triebwagen mit einem Drehmomentwandler und einer hydrodynamischen Kupplung und einem hydrodynamischen Retarder sowie einem mechanischem Wendeteil konzipiert. Im jeweils gefüllten Kreislauf - hydrodynamischer Drehmomentwandler oder hydrodynamische Kupplung - erfolgt die Leistungsübertragung zwischen dem Pumpen- und Turbinenrad durch die Massenkräfte der Betriebsflüssigkeit. Der erste Gang wird über den hydrodynamischen Drehzahl-/Drehmomentwandler realisiert. Dabei nimmt das feststehende Leitrad je nach Fahrzustand das Differenzmoment zwischen Pumpen- und Turbinenrad auf und bewirkt eine stufenlose und selbsttätige Drehmomentwandlung. Die hydrodynamische Kupplung wird im zweiten Gang aktiviert. Dabei ist das von der Turbine abgegebene Drehmoment stets gleich dem von der Pumpe aufgenommenen Drehmoment Während beziehungsweise bei Traktion erfolgen die Gangwechsel zwischen dem hydrodynamischen Drehzahl-/Drehmomentwandler und der hydrodynamischen Kupplung automatisch ohne Zugkraftunterbrechung weich, stoß- und verschieißfrei durch Füllen und Entleeren der Kreisläufe. Der hydrodynamische Retarder ermöglicht des weiteren ein verschleißfreies Bremsen. Der Fahrtrichtungswechsel erfolgt bei Stillstand des Fahrzeuges durch ein integriertes, mechanisches Wendegetriebe mit hydraulisch betätigtem Wendeschaltzylinder. Im einzelnen erfolgt die Leistungsübertragung von einer Antriebsmaschine beispielsweise über eine drehelastische Kupplung und eine Gelenkwelle auf die Eingangswelle des Turbogetriebes. Auf dieser ist ein Hochgangsstimrad angeordnet, das über zwei Hochgangsritzel die beiden Primärwellen mit den Pumpenrädem der beiden hydrodynamischen Kreisläufe antreibt Die Pumpenräder übertragen die Leistung durch die Massenkräfte der Betriebsflüssigkeit auf die Turbinenräder. Der hydrodynamische Drehzahl-/Drehmomentwandler und die hydrodynamische Kupplung für die zweite Gangstufe sind dabei derart ausgebildet und ausgelegt, daß diese bei gleicher mechanischer Untersetzung im unteren und oberen Geschwindigkeitsbereich mit gutem Wirkungsgrad arbeiten. Die hydrodynamische Kupplung und der hydrodynamische Drehzahl-/Drehmomentwandler sind in axialer Richtung zwischen Getriebeeingangswelle und Getriebeausgangswelle betrachtet hintereinander und die Primärteile auf einer gemeinsamen Welle angeordnet, das heißt koaxial zueinander. Eine derartige Getriebebaueinheit zur Realisierung zweier Gangstufen baut jedoch in axialer Richtung enorm lang. Insbesondere beim Einsatz in Unterflurantriebsanlagen in Schienenfahrzeugen mit einer mit dem Mehrkreislaufgetriebe gekoppelten Antriebsmaschine kann diese Bauart zu Problemen führen, da der in axialer Richtung zur Verfügung stehende Bauraum zwischen der Anbindung der Antriebsmaschine am Wagenkasten und den in einem Drehgestell gelagerten Rädern nicht ausreicht und somit die Notwendigkeit der Schaffung von Mitten- oder Seitenabtrieben am Mehrkreislaufgetriebe oder der Zwischenschaltung von Umkehrgetrieben zur Realisierung einer entsprechenden U- oder V-förmigen Anordnung von Getriebebaueinheit und Antriebsmaschine besteht. Dies bedeutet jedoch entweder erhebliche Modifikationen am Getriebe selbst oder das Erfordernis des Vorsehens zusätzlicher Komponenten in Form von Umkehrgetrieben, desweiteren Erhöhungen des Getriebe- bzw. Gesamtgewichtes des Antriebssystems und führt zu einer erheblichen Variantenvielfalt.

Aus der deutschen Auslegeschrift DE 1137 754 B ist ein hydrodynamisches Mehrkreislaufgetriebe bekannt, welches zwei hydrodynamische Kreisläufe aufweist, die parallel zueinander im wesentlichen mit nur geringem axialem Versatz angeordnet sind. Diese sind über ein Hochgangstrio miteinander verbunden. In Analogie gilt dies auch für die Kopplung der Abtriebe mit dem Ausgang der Getriebebaueinheit. Zwischen der Getriebeeingangswelle und der hydrodynamischen Kupplung ist eine schaltbare Kupplung vorgesehen. Diese soll die rein mechanische Übertragung der Leistung ermöglichen. Der Gesamtarbeitsbereich der Getriebebaueinheit setzt sich somit aus einer ersten hydrodynamischen Gangstufe, welche über den hydrodynamischen Drehzahl-/Drehmomentwandler realisiert wird sowie einer zweiten mechanischen Gangstufe zusammen, wobei beim Übergang zwischen der ersten und zweiten Gangstufe die hydrodynamische Kupplung im Betrieb ist und über einen Teil des Übergangsbereiches die Leistung überträgt, wobei dies gleichzeitig zur Synchronisation der einzelnen, miteinander in Wirkverbindung bringbaren Kupplungselemente der schaltbaren Kupplung dient. Mit dieser Ausführung ist in axialer Richtung immer der zusätzliche Bauraum für die schaltbare Kupplung zu berücksichtigen. Des weiteren ist mit dieser Ausführung eine Drehrichtungsumkehr nicht möglich.

Ein gattungsgemäßes hydrodynamisches Mehrkreislaufgetriebe in Form eines 2-Gang-Turbogetriebes ist aus der Druckschrift DE 3415 909 A vorbekannt. Auch dieses umfasst eine Getriebeeingangswelle und eine Getriebeausgangswelle sowie zwei hydrodynamische Bauelemente zur Bildung zweier Traktions-Arbeitskreisläufe für zwei unterschiedliche Geschwindigkeitsbereiche - ein erstes hydrodynamisches Bauelement in Form eines hydrodynamischen Drehzahl-/Drehmomentwandlers und ein zweites hydrodynamisches Bauelement in Form einer hydrodynamischen Kupplung. Mit der Getriebeeingangswelle ist ein Hochgangssatz zum Antrieb der beiden hydrodynamischen Bauelemente gekoppelt. Der hydrodynamische Drehzahl-/Drehmomentwandler ist über einen Wendeschaltsatz mit der Getriebeausgangswelle verbunden. Beide hydrodynamischen Bauelemente sind parallel zueinander und frei von oder mit nur geringem Versatz in axialer Richtung zwischen Getriebeeinangswelle und Getriebeausgangswelle betrachtet, angeordnet. Beide hydrodynamischen Bauelemente umfassen mindestens ein mit einer Primärwelle drehfest verbundenes Pumpenrad und ein mit einer Sekundärwelle drehfest verbundenes Turbinenrad. Ferner ist eine hydrodynamische Bremseinrichtung in der Getriebebaueinheit vorgesehen, welche in Form eines hydrodynamischen Retarders ausgeführt ist. Dieser ist längenneutral im Getriebegehäuse, d. h. frei von einem Einfluss auf die axiale Lage eines mit der Getriebeausgangswelle gekoppelten Abtriebsflansches angeordnet. Ferner ist ein Wendeschaltsatz vorgesehen, dieser ist jedoch an das Grundgetriebe angeflanscht. Zur Realisierung der einzelnen Gangstufen sind zusätzliche mechanische Übertragungseinrichtungen vorgesehen, so dass das Gesamtgetriebe in axialer Richtung sehr lang baut.

Der Erfindung lag daher die Aufgabe zugrunde, ein hydrodynamisches Mehrkreislaufgetriebe der eingangs genannten Art, insbesondere ein 2-Gang-Turbogetriebe mit zwei hydrodynamischen Bauelementen zur Realisierung zweier Traktions-Arbeitskreisläufe derart weiter zu entwickeln, daß die genannten Nachteile vermieden werden, insbesondere die Getriebebaueinheit in horizontaler und vertikaler Richtung bei gleichzeitiger Realisierung einer Vielzahl von Funktionen, beispielsweise Drehrichtungsumkehr und Bildung eines Bremsmomentes einen minimalen Bauraum benötigt und somit in einfacher Weise in Antriebssysteme, insbesondere für den Einsatz in Schienenfahrzeugen ohne erforderliche Modifikationen am Getriebe selbst, der Kopplung mit der Antriebsmaschine oder den Eingangswellen der, in der Regel über einen Wellenstrang nachgeordneten Radsatzgetriebe integrierbar ist. Die Getriebeausführung soll für eine Vielzahl von Antriebssystemen mit unterschiedlichen Umgebungsanforderungen hinsichtlich des zur Verfügung stehenden Bauraumes geeignet sein und damit zur Reduzierung der Variantenvielfalt hinsichtlich der Anbindungen der einzelnen Elemente und der damit erforderlichen Ausgestaltung der einzelnen Komponenten des Antriebssystemes beitragen.

Die erfindungsgemäße Lösung ist durch die Merkmale der Ansprüche 1, 14 und 15 charakterisiert. Vorteilhafte Ausgestaltungen sind in den Unteransprüchen wiedergegeben.

Das hydrodynamische Mehrkreislaufgetriebe in Form eines 2-Gang-Turbogetriebes mit einer Getriebeeingangswelle und einer Getriebeausgangswelle weist zwei hydrodynamische Bauelemente zur Bildung zweier Traktions-Arbeitskreisläufe für zwei unterschiedliche Geschwindigkeitsbereiche - ein erstes hydrodynamisches Bauelement in Form eines hydrodynamischen Drehzahl-/Drehmomentenwandlers und ein zweites hydrodynamisches Bauelement in Form einer hydrodynamischen Kupplung auf. Es ist ein mit der Getriebeeingangswelle gekoppelter Hochgangssatz zum Antrieb des hydrodynamischen Drehzahl-/Drehmomentenwandlers und der hydrodynamischen Kupplung vorgesehen. Der hydrodynamische Drehzahl-/Drehmomentwandler und die hydrodynamischen Kupplung sind des weiteren über einen Wendeschaltsatz mit der Getriebeausgangswelle verbunden. Erfindungsgemäß sind die beiden hydrodynamischen Bauelemente, hydrodynamischer Drehzahl-/Drehmomentwandler und hydrodynamische Kupplung parallel zueinander und frei von oder mit nur geringem Versatz in axialer Richtung zwischen Getriebeeingangswelle und Getriebeausgangswelle betrachtet angeordnet. Vorzugsweise sind beide in einer horizontalen Ebene angeordnet D.h. beide sind in axialer Richtung betrachtet nicht hintereinander sondern im wesentlichen in einer gemeinsamen oder im Bereich einer gemeinsamen Ebene, welche durch eine Senkrechte zur Getriebeeingangswelle in Horizontalrichtung und eine Senkrechte zur Getriebeeingangswelle in der Vertikalrichtung beschreibbar ist, angeordnet. Diese Anordnung ermöglicht eine extrem kurze Bauweise bezüglich der Anordnung der hydrodynamischen Bauelemente.

In axialer Richtung den einzelnen hydrodynamischen Bauelementen nachgeschaltet ist ein Wendeschaltsatz, welcher mit der Getriebeausgangswelle gekoppelt ist. Der Wendeschaltsatz wird dabei über zwei Stirnradzüge ermöglicht, welche gegenüber den Ausführungen von Mehrkeislaufgetrieben mit zwei Gängen gemäß dem Stand der Technik in axialer Richtung keinen zusätzlichen Bauraum benötigen. Durch die Kopplung zwischen den einzelnen Elementen der beiden Stirnradzüge werden unterschiedliche Drehrichtungen an der Getriebeausgangswelle realisiert. Der Wendeschaltsatz ist dabei mit einer der beiden Sekundärwellen direkt gekoppelt und mit der anderen über ein Verbindungsrad, vorzugsweise ein Verbindungsstirnrad.

Konkret konstruktiv weist der hydrodynamische Drehzahl-/Drehmomentenwandler mindestens ein, mit einer ersten Primärwelle drehfest verbundenes Pumpenrad, ein mit einer ersten Sekundärwelle drehfest verbundenes Turbinenrad und ein Leitrad auf. Die hydrodynamische Kupplung umfaßt ein mit einer zweiten Primärwelle drehfest verbundenes Pumpenrad und ein mit einer zweiten Sekundärwelle drehfest verbundenes Turbinenrad.

Die Kopplung der Abtriebselemente, insbesondere Turbinenräder der einzelnen hydrodynamischen Bauelemente mit der Getriebeausgangswelle erfolgt über drehfest mit den Turbinenwellen verbundene Sekundärwellen und den Wendeschaltsatz. Der Wendeschaftsatz umfaßt dabei zwei Stirnradzüge, einen ersten Stimradzug und einen zweiten Stimradzug, wobei Mittel zur Kopplung zwischen einzelnen Elementen zwischen dem ersten und dem zweiten Stimradzug zum Zwecke der Änderung der Leistungsflußrichtung und damit der Drehrichtungsumkehr vorgesehen sind. Der erste Stirnradzug wird dabei von einem drehfest mit einer Sekundärwelle verbundenen Stirnrad und einem weiteren Stirnrad gebildet, welches bei Anbindung der anderen zweiten Sekundärwelle an den Wendeschaltsatz über ein Verbindungsstirnrad als Zwischenrad fungiert, während der zweite Stirnradzug in horizontaler Richtung dazu versetzt von zwei mit einem Zwischenrad, welches drehfest mit der Getriebeausgangswelle gekoppelt ist, kämmenden und jeweils koaxial zum Zwischenrad des ersten Stimradzuges und koaxial zum mit der mit dem Turbinenrad der hydrodynamischen Kupplung verbundenen Sekundärwelle gekoppelten Stirnrädern gebildet wird. Die Mittel zur Realisierung der Drehrichtungsumkehr umfassen dabei beispielsweise zwei Schiebeschaltwellen, welche vorzugsweise parallel, das heißt in Längsrichtung im wesentlichen nicht versetzt zueinander angeordnet sind und welche jeweils wahlweise das Zwischenrad des ersten Stirnradzuges und das koaxial zu diesem angeordnete Stirnrad des zweiten Stimradzuges bzw. das drehfest mit der zweiten Sekundärwelle verbundene Stirnrad mit dem koaxial dazu angeordneten Stirnrad des zweiten Stirnradzuges verbinden.

Die Anbindung des Wendeschaltsatzes an die Kupplung und Kopplung des hydrodynamischen Drehzahl-/Drehmomentwandlers mit dem Wendeschaltsatz über ein Verbindungsstirnrad ermöglicht es, die Elemente des Wendeschaltsatzes parallel zur mit dem Wandler gekoppelten Sekundärwelle anzuordnen, so daß somit in axialer Richtung bei Verlängerung der mit dem Wandler gekoppelten Sekundärwelle genügend Bauraum für die Anordnung des Retarders zur Verfügung steht, welcher nicht zu einer zusätzlichen Verlängerung der Getriebebaueinheit führt. Der Retarder kann somit parallel zum Wendeschaltsatz angeordnet werden und erstreckt sich in axialer Richtung betrachtet nicht über oder nur geringfügig über die axiale Erstreckung des Wendeschaltsatzes hinaus.

Des weiteren ist es besonders vorteilhaft, einen hydrodynamischen Retarder im Getriebegehäuse mit zu integrieren bzw. im Getriebeghäuse einen entsprechenden Vorsprung zur Aufnahme des Retarders vorzusehen. Dieser, insbesondere dessen Rotorschaufelrad ist dabei vorzugsweise drehfest mit der Sekundärwelle des hydrodynamischen Bauelementes gekoppelt, welches über das Verbindungsstirnrad an den Wendeschaltsatz angekoppelt ist. Der hydrodynamische Retarder kann somit längenneutral ins Getriebegehäuse integriert bzw. an dieses angeflanscht werden. Längenneutral bedeutet dabei, daß keine Kollission des Retarders bzw. seiner Außenabmessungen mit dem Abtriebsflansch erfolgt bzw. daß die Anordnung des Retarders keinen Einfluß auf die axiale Anordnung des Abtriebsflansches besitzt. Vorzugsweise erfolgt die Anbindung der ersten Sekundärwelle über das Verbindungsstirnrad an den Wendeschaltsatz. D.h. das Rotorschaufelrad des hydrodynamischen Retarders ist mit der Sekundärwelle des hydrodynamischen Drehzahl-/Drehmomentwandlers gekoppelt und somit in einem Bereich des Getriebes angeordnet, welcher frei vom zweiten Stirnradzug ist. Diese Ausführung ermöglicht eine kurze Baulänge.

Insbesondere die Kombination aus den Merkmalen der Anordnung der Traktionsbauelemente Drehmoment-/Drehzahlwander und hydrodynamischer Kupplung sowie die längenneutrale Anordnung des hydrodynamischen Retarders und Anordnung des Abtriebes, das heißt der Getriebeausgangswelle in vertikaler Richtung versetzt zur Getriebeeingangswelle betrachtet, ermöglicht die Schaffung einer in axialer Richtung sehr kurz bauenden Getriebebaueinheit.

Unter einem weiteren Aspekt der Erfindung ist die Getriebeausgangswelle parallel zur Getriebeeingangswelle, jedoch in vertikaler Richtung versetzt zu dieser angeordnet. Diese Ausführung ermöglicht insbesondere beim Einsatz von Antrieben in Niederflurfahrzeugen eine optimale Anbindung an die Anschlußelemente unter Ausnutzung des zur Verfügung stehenden Bauraumes. Dabei können auch die nachfolgend genannten beiden Grenzsituationen optimal mit einem erfindungsgemäßen Mehrkreislaufgetriebe sehr kurzer Baulänge abgedeckt werden:
- bei Projizierung in eine gemeinsame horizontale Ebene koaxiale Anordnung von Getriebeeingangswelle und Getriebeausgangswelle, d.h. parallele Anordnung mit Versatz in vertikaler Richtung jedoch ohne oder im wesentlichen mit geringem Versatz in horizontaler Richtung
- parallele Anordnung mit großem Versatz in horizontaler Richtung.

Die Primärwellen sind mit den Ausgängen des Hochgangssatzes gekoppelt, während die Sekundärwellen mit dem Wendeschaltsatz - die erste Sekundärwelle über ein Verbindungsstirnrad und die zweite Sekundärwelle direkt - gekoppelt sind. Der Antrieb der einzelnen hydrodynamischen Kreisläufe erfolgt über einen, beiden zugeordneten Hochgangssatz, welcher vorzugsweise drei Stirnräder umfaßt. Ein erstes Stirnrad, das sogenannte Hochgangsstirnrad ist dabei drehfest mit der Getriebeeingangswelle verbunden. Dieses steht dabei mit entsprechenden Hochgangsritzeln, welche mit den Primärwellen wenigstens mittelbar drehfest verbunden sind, in Eingriff. Die Kopplung der Ritzel mit den einzelnen Primärwellen kann dabei entweder drehfest über eine kraftund/oder formschlüssige Verbindung oder die einteilige Ausführung von Ritzel und Primärwelle erfolgen. Eine andere Möglichkeit besteht darin, entsprechende Schaltelemente, welche eine wahlweise drehfeste Verbindung zwischen dem Ritzel und der Primärwelle ermöglichen, zu realisieren.

Die erfindungsgemäße Lösung beschreibt lediglich den Grundaufbau einer Getriebebaueinheit, welche durch weitere zusätzliche funktionale Elemente ergänzt werden kann, auf die hier im einzelnen nicht eingegangen wird, wobei jedoch vorausgesetzt wird, daß diese im Ermessen des zuständigen Fachmannes liegen.

Die erfindungsgemäße Lösung ist nachfolgend anhand von Figuren erläutert. Darin ist im einzelnen folgendes dargestellt:
- Figur 1a: verdeutlicht anhand eines Schnittes A-B aus einer Ansicht von vorn auf ein Getriebe gemäß Figur 1b eine erfindungsgemäße Ausführung eines Mehrkreislaufgetriebes, insbesondere Turbogetriebes;
- Figur 1b: verdeutlicht eine Ansicht von vorn auf eine erfindungsgemäße Ausführung eines Mehrkreislaufgetriebes, insbesondere Turbogetriebes;
- Figur 2: verdeutlicht in schematisch stark vereinfachter Darstellung eine Anordnung eines erfindungsgemäß gestalteten Mehrkreislaufgetriebes in einem Antriebsstrang für Schienenfahrzeuge, insbesondere in einem Niederflurantrieb.

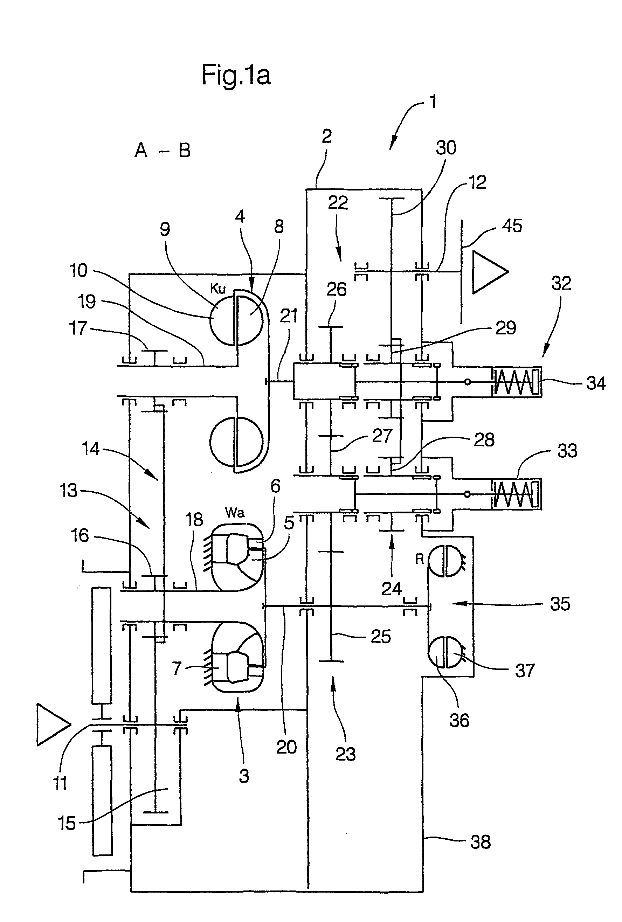

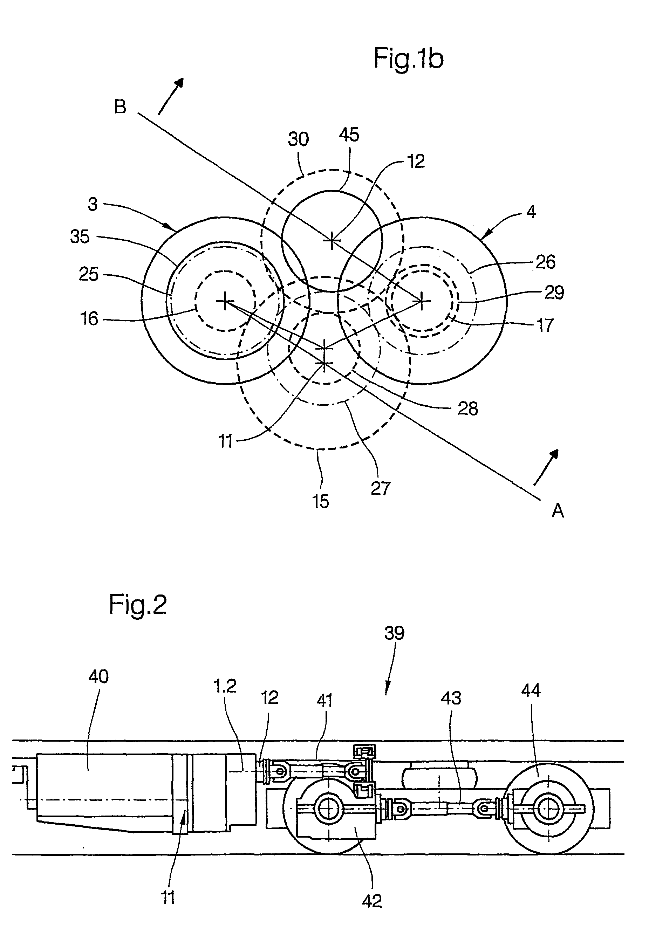

Die Figur 1a verdeutlicht anhand eines Schnittes A-B aus einer Ansicht von vom auf eine vorteilhafte Ausführung eines erfindungsgemäß gestalteten Mehrkreislaufgetriebes 1, insbesondere eines 2-Gang-Turbogetriebes 2 gemäß Figur 1 b, den Aufbau und die Funktionsweise dessen. Unter einem Mehrkreislaufgetriebe 1 wird dabei eine Getriebebaueinheit verstanden, bei welcher mehrere hydraulische Kreisläufe so miteinander kombiniert werden, daß deren Nutzungsbereiche sich ergänzen. Bei Turbogetrieben besteht die Ergänzung darin, daß weitere hydraulische Kreisläufe den Fahrbereich über den ersten hydraulischen Gang hinaus in Fahrtrichtung erweitern. Das Mehrkreislaufgetriebe 1 umfaßt zur Realisierung der Leistungsübertragung in den einzelnen Gängen, welche unterschiedliche Geschwindigkeitsbereiche charakterisieren, zwei hydraulische Traktions-Arbeitskreisläufe, welche von einem hydrodynamischen Drehzahl-/Drehmomentwandler 3 und einer hydrodynamischen Kupplung 4 gebildet werden. Der hydrodynamische Drehzahl-/Drehmomentwandler 3 umfaßt dabei ein Pumpenrad 5 , ein Turbinenrad 6 und mindestens ein Leitrad 7. Der hydrodynamische Drehzahl-/Drehmomentwandler 3 kann dabei unterschiedlich ausgeführt sein, hinsichtlich der Anordnung des Leitrades 7 zwischen dem Pumpen- und Turbinenrad in Bezug auf die Strömungsführung. Die konkrete Auswahl des hydrodynamischen Drehzahl-/Drehmomentwandlers erfolgt entsprechend des Einsatzfalles und der zu erzielenden Charakteristiken in den Gangbereichen. Die hydrodynamische Kupplung 4 umfaßt ein Pumpenrad 8 und ein Turbinenrad 9, welche miteinander wenigstens einen torusförmigen Arbeitsraum 10 bilden. Beide sind erfindungsgemäß in axialer Richtung von einer Getriebeeingangswelle 11 zur Getriebeausgangswelle 12 betrachtet parallel zueinander und im wesentlichen frei von einem Versatz in axialer Richtung oder mit nur geringem Versatz angeordnet. Vorzugsweise erfolgt die Anordnung in einer gemeinsamen horizontalen Ebene, welche in der Regel senkrecht zur Axialschnittebene ausgerichtet ist, d.h. ohne Versatz, direkt in einer Ebene, welche durch die Senkrechten zur Rotationsachse der einzelnen Pumpenräder beschreibbar ist oder mit anderen Worten in einer Seitenansicht hintereinander. Beide - hydrodynamischer Drehzahl-/Drehmomentwandler 3 und hydrodynamische Kupplung 4 - sind wenigstens mittelbar mit der Getriebeeingangswelle 11 und der Getriebeausgangswelle 12 drehfest verbunden. Zur Realisierung der Kopplung sind Mittel 13 zur Kopplung der einzelnen hydrodynamischen Kreisläufe - dem hydrodynamischen Drehzahl-/Drehmomentwandler 3 und der hydrodynamischen Kupplung 4 - mit der Getriebeeingangswelle 11 vorgesehen. Die Mittel 13 umfassen einen dreirädrigen Hochgang 14. Dieser umfaßt mindestens ein Hochgangsrad 15, insbesondere in Form eines Stirnrades, welches mit Hochgangsritzeln 16 und 17 kämmt, wobei das Hochgangsritzel 16 drehfest mit einer ersten, mit dem Pumpenrad 8 des hydrodynamischen Drehzahl-/Drehmomentenwandlers 3 gekoppelten Primärwelle 18 drehfest verbindbar ist. Das zweite Hochgangsritzel 17 ist mit einer zweiten Primärwelle 19, welche mit dem Pumpenrad 5 der hydrodynamischen Kupplung 4 gekoppelt ist, drehfest verbindbar. Die mit den Turbinenrädern 6 des hydrodynamischen Drehzahl-/Drehmomentwandlers 3 beziehungsweise 9 der hydrodynamischen Kupplung 4 drehfest gekoppelten Sekundärwellen - eine erste Sekundärwelle 20 und eine zweite Sekundärwelle 21 - sind über einen Wendeschaltsatz 22 mit der Getriebeausgangswelle 12 verbunden. Dieser umfaßt einen ersten Stirnradzug 23 und einen zweiten Stirnradzug 24. Der erste Stirnradzug 23 umfaßt dabei zwei Stirnräder 26 und 27, die miteinander in Eingriff stehen. Das Stirnrad 26 ist mit der zweiten Sekundärwelle 21 drehfest verbunden. Die Anbindung der ersten Sekundärwelle 20 an den ersten Stirnradzug 23 und damit den Wendeschaltsatz 22 erfolgt über ein Verbindungsstirnradrad 25, weiches mit dem Stirnrad 27, das dann als Zwischenrad zwischen den beiden, mit den Sekundärwellen 20, 21 gekoppelten Stirnrädern 25 und 26 fungiert und nachfolgend als Zwischenrad 27 bezeichnet wird, kämmt. Der zweite Stirnradzug 24 umfaßt drei miteinander in Eingriff stehende Stirnräder, ein erstes Stirnrad 28, ein zweites Stirnrad 29 und ein Zwischenrad 30, welches sowohl mit dem ersten Stirnrad 28 und dem zweiten Stirnrad 29 kämmt. Das Zwischenrad 30 ist dabei drehfest mit der Getriebeausgangswelle 12 verbunden. Die beiden Stirnräder 28 und 29 des zweiten Stirnradsatzes 24 sind koaxial zum Zwischenrad 27 und dem mit der zweiten Sekundärwelle 21 gekoppelten Stirnrad 26 des ersten Stirnradzuges 23 angeordnet. Zur Realisierung der Drehrichtungsumkehr weist der Wendeschaltsatz 22 Mittel 32 auf. Diese Mittel umfassen zwei Schaltzylinder mitSchiebeschaltwellen, einen ersten Schaltzylinder mit Schiebeschaltwelle 33 und einen zweiten Schaltzylinder mit Schiebeschaltwelle 34. Beide Schiebeschaltwellen ermöglichen dabei je nach ihrer Stellung eine Leistungsübertragung vom ersten Stirnradzug 23 auf den zweiten Stirnradzug 24. Die erste Schiebeschaltwelle ist dabei dem Zwischenrad 27 des ersten Stirnradzuges 23 und dem ersten Stirnrad 28 des zweiten Stirnradzuges 24 zugeordnet, während die zweite Schiebeschaltwelle 34 dem zweiten Stirnrad 26 und dem Stirnrad 29 des zweiten Stirnradzuges 24 zugeordnet ist. Die Schiebeschaltwellen 33 und 34 sind dabei parallel zueinander angeordnet. Ihre axiale Erstreckung vom Getriebeeingang zum Getriebeausgang hin betrachtet ist auf ein Minimum beschränkt. Die Leistungsübertragung in den einzelnen Geschwindigkeitsbereichen gestaltet sich dabei wie folgt: Die Getriebeeingangswelle 11, welche in der Regel mit einer Antriebsmaschine koppelbar ist, wird von dieser angetrieben. Das auf der Getriebeeingangswelle 11 angeordnete Hochgangsstirnrad 15 des dreirädrigen Hochgangs 14 treibt über die Hochgangsritzel 16 und 17 jeweils die Primärwellen 18 und 19 der mit den drehfest mit diesen gekoppelten Pumpenrädern 5 des Drehzahl-/Drehmomentwandlers 3 und dem Pumpenrad 8 der hydrodynamischen Kupplung 4 an. Die Pumpenräder 5 beziehungsweise 8 übertragen dabei die Leistung durch die Massenkräfte der Betriebsflüssigkeit auf die entsprechenden Turbinenräder, das Turbinenrad 6 des hydrodynamischen Drehzahl-/Drehmomentwandlers 3 und das Turbinenrad 9 der hydrodynamischen Kupplung 4. Die Leistungsübertragung im ersten Gang erfolgt über den hydrodynamischen Drehzahl-/Drehmomentwandler 3, die Leistungsübertragung im zweiten Gang wird über die hydrodynamische Kupplung 4 realisiert. Der hydrodynamische Drehzahl-/Drehmomentwandler 3 und die hydrodynamische Kupplung 4 sind dabei derart ausgebildet und ausgelegt, daß diese bei gleicher mechanischer Übersetzung im Wendeschaltsatz 22 im unteren und oberen Geschwindigkeitsbereich mit gutem Wirkungsgrad arbeiten. Die Leistungsübertragung von den Turbinenrädern 6 beziehungsweise 9 auf die entsprechenden Sekundärwellen 20 beziehungsweise 21 und von diesen auf die Getriebeausgangswelle 12 erfolgt über die Stirnradzüge 23 und 24 des Wendeschaltsatzes 22 entweder direkt oder unter Zwischenschaltung des Verbindungsstirnrades 25 auf die Getriebeausgangswelle 12. Entscheidend für die Drehrichtung an der Getriebeausgangswelle 12 sind dabei die Stellungen der beiden Schiebeschaltwellen 33 und 34. ist die zweite Schiebeschaltwelle 34 derart betätigt, daß diese das Stirnrad 26 des ersten Stimradzuges 23 mit dem Stirnrad 29 des zweiten Stirnradzuges 24 drehfest verbindet, erfolgt die Leistungsübertragung von der Getriebeeingangswelle 11 im ersten Gang über den hydrodynamischen Drehzahl-/Drehmomentwandler 3 auf die erste Sekundärwelle 20, das damit verbundene erste Verbindungsstirnrad 25, auf das Zwischenrad 27 und das Stirnrad 26 des ersten Stirnradzuges 23 und von diesem auf das mit diesem drehfest gekoppelte Stirnrad 29 des zweiten Stirnradzuges 24 sowie das mit diesem in Eingriff stehende Zwischenrad 30, welches drehfest mit der Getriebeausgangswelle 12 verbunden ist. Der Leistungsfluß von der Getriebeeingangswelle über die hydrodynamische Kupplung erfolgt dann im zweiten Gang mit dem über die zweite Schiebeschaltwelle 34 in der ersten Schaltposition drehfest mit der Sekundärwelle 21 gekoppelte Stirnrad 26 auf das zweite Stirnrad 29 und das Zwischenrad 30 des zweiten Stimradzuges 24. Im Reversierbetrieb in beiden Gangstufen wird der Leistungsfluß durch eine Stellung der ersten Schiebeschaltwelle 33, welche eine drehfeste Kopplung zwischen dem Zwischenrad 27 und dem ersten Stirnrad 28 des zweiten Stimradzuges 24 ermöglicht, geführt. In den einzelnen Gangstufen ist dabei jeweils nur das im Betrieb befindliche hydrodynamische Bauelement - hydrodynamischer Drehzahl-/Drehmomentwandler 3 oder hydrodynamische Kupplung 4 - befüllt.

Die Getriebeausgangswelle 12 ist dabei im Axialschnitt betrachtet im wesentlichen koaxial zur Getriebeeingangswelle angeordnet, jedoch vorzugsweise in vertikaler Richtung betrachtet im wesentlichen übereinander. Das heißt, es erfolgt vorzugsweise eine Anordnung im Bereich einer gemeinsamen, durch einen Axialschnitt charakterisierten Ebene, welche durch den theoretischen Verlauf der Getriebeeingangswelle beziehungsweise der Getriebeausgangswelle und einer Senkrechten dazu in vertikaler Richtung charakterisiert ist. Diese Anordnung ermöglicht eine platzsparende Bauweise sowohl in horizontaler als auch vertikaler Richtung. Denkbar sind jedoch auch Anordnungen mit Versatz in horizontaler Richtung. Dieser wird im Hinblick auf die einbauseitigen Gegebenheiten, d.h. insbesondere den vorgegebenen Anschlußvorgaben für die anderen Elemente des Antriebsstranges gewählt und durch entsprechende Auslegung der Stirnräder des Wendeschaltsatzes realisiert.

Bei der in der Figur 1a dargestellten Getriebeausführung 1 ist in vorteilhafter Weise der Wendeschaltssatz 22 hinter der hydrodynamischen Kupplung 4 angeordnet, wobei die Verbindung zwischen einem Übetragungsglied des Wendeschaltsatzes 22, hier dem Stirnrad 26, durch die drehfeste Verbindung zwischen zweiter Sekundärwelle 21 und dem Stirnrad 26 ohne Zwischenschaltung weiterer an der Leistungsübertragung und Drehzahl-/Drehmomentenwandlung beteiligter Komponenten, d.h. direkt erfolgt. Diese Verbindung kann verschiedenartig ausgeführt sein. Zur Anbindung des hydrodynamischen Drehzahl-/Drehmomentenwandlers 3 an die Getriebeausgangswelle 12 unter Zwischenschaltung des Wendeschaltsatzes 22 ist zur Kopplung der ersten Sekundärwelle 20 mit dem Wendeschaltsatz 22 das Verbindungsstirnrad 25 vorgesehen. Diese Anordnung ermöglicht eine besonders platzsparende Bauweise, da der Wendeschaltsatz hinter der in axialer Richtung kürzer bauenden hydrodynamischen Kupplung angeordnet ist.

Unter einem weiteren Aspekt der Erfindung weist das Mehrkreislaufgetriebe 1 eine hydrodynamische Bremseinrichtung 35 auf. Diese ist längenneutral auf der ersten Sekundärwelle 20 angeordnet. D.h., daß die Anordnung bzw. Lage des Retarders 35 keinen Einfluß auf die axiale Anordnung des Abtriebsflansches 45 besitzt. Beide Retarder 35 und Abtriebsflansch 45 kollidieren nicht hinsichtlich ihrer äußeren Abmessungen. Die Anordnung erfolgt dabei in axialer Richtung zwischen Getriebeeingangswelle 11 und Getriebeausgangswelle 12 betrachtet hinter dem zur Verbindung mit dem Wendeschaltsatz 22 vorgesehenen Verbindungsstirnrad 25. Der hydrodynamische Retarder 35 umfaßt dabei ein Rotorschaufelrad 36, welches vorzugsweise drehfest mit der ersten Sekundärwelle 20 gekoppelt ist und einen Stator 37, wobei dieser vorzugsweise im Getriebegehäuse 38 gelagert ist oder von diesem gebildet wird.

Die Ansicht von vorn gemäß Figur 1 b verdeutlicht die nebeneinander erfolgende Anordnung von hydrodynamischem Drehzahl-/Drehmomentwandler 3 und hydrodynamischer Kupplung 4. Die Getriebeeingangswelle ist dabei in horizontaler Richtung versetzt zu den Primärwellen 18 beziehungsweise 19 der hydrodynamischen Bauelemente angeordnet. Die Anordnung erfolgt parallel. Des weiteren ersichtlich ist, daß die beiden Primärwellen, erste Primärwelle 18 und zweite Primärwelle 19 vorzugsweise in Einbaulage betrachtet in einer gemeinsamen horizontalen Ebene angeordnet sind. Die Getriebeausgangswelle 12 ist in axialer Richtung in einer Ebene mit der Getriebeeingangswelle 11 angeordnet, jedoch in vertikaler Richtung zu dieser versetzt. Desweiteren ersichtlich ist neben der Anordnung der einzelnen leistungsübertragenden Elemente in vertikalen Ebenen zueinander die Anordnung in horizontalen Ebenen. Auch hier wird noch einmal ersichtlich, daß die Getriebeausgangswelle 12 gegenüber der Getriebeeingangswelle in horizontaler Richtung versetzt geführt ist.

Das erfindungsgemäß gestaltete Mehrkreislaufgetriebe findet vorzugsweise in einer Antriebseinheit 39 gemäß Figur 2 für Schienenfahrzeuge Verwendung, wobei diese hauptsächlich für Niederfluranwendungen geeignet ist. Die Getriebeeingangswelle 11 ist dabei mit einer Antriebsmaschine 40 gekoppelt. Die Getriebeausgangswelle ist über einen Gelenkwellenstrang 41 mit einem ersten Radsatzgetriebe 42 verbunden. Das erste Radsatzgetriebe 42 steht wiederum über einen Gelenkwellenstrang 43 mit einem zweiten Radsatzgetriebe 44 in Verbindung.

Die erfindungsgemäße Lösung ermöglicht eine Ausführung eines Mehrkreislaufgetriebes für Anwendungen, welche eine extrem kurze Baulänge und geringe Bauhöhe erfordern. Die zur Realisierung der Funktionsweise erforderlichen Bauelemente sind hier auf ein Minimum reduziert. Denkbar ist jedoch auch das Vorsehen zusätzlicher Funktionskomponenten.

### Bezugszeichenliste

- 1: Mehrkreislaufgetriebe
- 2: Turbogetriebe
- 3: hydrodynamischer Drehzahl-/Drehmomentwandler
- 4: hydrodynamische Kupplung
- 5: Pumpenrad des hydrodynamischen Drehzahl-/Drehmomentwandlers
- 6: Turbinenrad des hydrodynamischen Drehzahl-/Drehmomentwandlers
- 7: Leitrad des hydrodynamischen Drehzahl-/Drehmomentwandlers
- 8: Pumpenrad der hydrodynamischen Kupplung
- 9: Turbinenrad der hydrodynamischen Kupplung
- 10: torusförmiger Arbeitsraum
- 11: Getriebeeingangswelle
- 12: Getriebeausgangswelle
- 13: Mittel zur Kopplung der einzelnen hydraulischen Kreisläufe mit der Getriebeeingangswelle
- 14: dreirädriger Hochgang
- 15: Hochgangsrad
- 16: Hochgangsritzel
- 17: Hochgangsritzel
- 18: erste Primärwelle
- 19: zweite Primärwelle
- 20: erste Sekundärwelle
- 21: zweite Sekundärwelle
- 22: Wendeschaltsatz
- 23: erster Stirnradzug
- 24: zweiter Stirnradzug
- 25: Stirnrad, Verbindungsstirnrad
- 26: Stirnrad
- 27: Zwischenrad
- 28: erstes Stirnrad
- 29: zweites Stirnrad
- 30: Zwischenrad
- 32: Mittel zur Realisierung der Drehrichtungsumkehr
- 33: erster Schaltzylinder mit Schiebeschaltwelle
- 34: zweiter Schaltzylinder mit Schiebeschaltwelle
- 35: hydrodynamische Bremseinrichtung
- 36: Rotorschaufelrad
- 37: Stator
- 38: Getriebegehäuse
- 39: Antriebseinheit
- 40: Antriebsmaschine
- 41: Gelenkwelle
- 42: erstes Radsatzgetriebe
- 43: Gelenkwelle
- 44: zweites Radsatzgetriebe
- 45: Abtriebsflansch

## Patentansprüche

1. Hydrodynamisches 2-Gang-Turbogetriebe für den Einsatz in Unterflurantriebssystemen von Schienenfahrzeugen mit Niederfluranteil.
1.1 mit einer Getriebeeingangswelle (11) und einer Getriebeausgangswelle (12);
1.2 mit zwei hydrodynamischen Bauelementen zur Bildung zweier Traktions-Arbeitskreisläufe für zwei unterschiedliche Geschwindigkeitsbereiche - einem ersten hydrodynamischen Bauelement in Form eines hydrodynamischen Drehzahl-/Drehmomentenwandlers (3) und einem zweiten hydrodynamischen Bauelement in Form einer hydrodynamischen Kupplung (4);
1.3 mit einem mit der Getriebeeingangswelle (11) gekoppelten Hochgangssatz zum Antrieb des hydrodynamischen Drehzahl-/Drehmomentenwandlers (3) und der hydrodynamischen Kupplung (4);
1.4 der hydrodynamische Drehzahl-/Drehmomentwandler (3) ist über einen Wendeschaltsatz (22) mit der Getriebeausgangswelle (12) verbunden;
1.5 der hydrodynamische Drehzahl-/Drehmomentenwandler (3) und die hydrodynamische Kupplung (4) sind parallel zueinander und frei von oder mit nur geringem Versatz in axialer Richtung zwischen Getriebeeingangswelle (11) und Getriebeausgangswelle (12) betrachtet angeordnet;
1.6 der hydrodynamische Drehzahl-/Drehmomentenwandler (3) umfaßt mindestens ein, mit einer ersten Primärwelle (18) drehfest verbundenes Pumpenrad (5), ein mit einer ersten Sekundärwelle (20) drehfest verbundenes Turbinenrad (6) und ein Leitrad (7);
1.7 die hydrodynamische Kupplung (4) umfaßt ein mit einer zweiten Primärwelle (19) drehfest verbundenes Pumpenrad (B) und ein mit einer zweiten Sekundärwelle (21) drenfest verbundenes Turbinenrad (9);
1.8 mit einer hydrodynamischen Bremseinrichtung in Form eines hydrodynamischen Retarders (35);
1.9 der hydrodynamische Retarder (35) ist längenneutral im Getriebegehäuse (38), d.h. frei von einem Einfluß auf die axiale Lage eines mit der Getriebeausgangswelle (12) gekoppelten Abtriebsflansches (45) angeordnet;
**gekennzeichnet durch** die folgenden Merkmale:
1.10 die hydrodynamische Kupplung (4) ist über den Wendeschaltsatz (22) mit der Getriebeausgangswelle (12) verbunden;
1.11 die Sekundärwellen (20, 21) sind mit dem Wendeschaltsatz (22) verbunden, wobei
die erste Sekundärwelle (20) über wenigstens ein verbindungsstirnrad (25) mit dem Wendeschaltsatz (22) verbunden ist und die zweite Sekundärwelle direkt mit dem Wendeschaltsatz (22) gekoppelt ist;
1.12 der hydrodynamische Retarder ist koaxial zum hydrodynamischen Drehzahl-/Drehmomentwandler angeordnet.

2. Hydrodynamisches 2-Gang-Turbogetriebe (1) nach Anspruch 1, **dadurch gekennzeichnet, daß** der hydrodynamische Drehzahl-/Drehmomontenwandler (3) und die hydrodynamische Kupplung (4) in einer horizontalen Ebene angeordnet sind.

3. Hydrodynamisches 2-Gang-Turbogetriebe (1) nach einem der Ansprüche 1 oder 2, **dadurch gekennzeichnet, daß** die Getriebeeingangswelle (11) und die Getriebeausgangswelle (12) in vertikaler Richtung zueinander versetzt angeordnet sind.

4. Hydrodynamisches 2-Gang-Turbogetriebe (1) nach Anspruch 3, **dadurch gekennzeichnet, daß** die Getriebeausgangswelle (12) in vertikaler Richtung zwischen Getriebeeingangswelle (11) und Getriebeausgangswelle (12) betrachtet oberhalb der Getriebeeingangswelle (11) angeordnet ist

5. Hydrodynamisches 2-Gang-Turbogetriebe (1) nach einem der Ansprüche 3 oder 4, **dadurch gekennzeichnet, daß** die Getriebeeingangswelle (11) und die Getriebeausgangswelle (12) im wesentlichen in einer gemeinsamen, in vertikaler Richtung ausgerichteten Ebene angeordnet sind.

6. Hydrodynamisches 2-Gang-Turbogetriebe (1) nach einem der Ansprüche 3 oder 4, **dadurch gekennzeichnet, daß** die Getriebeeingangswelle (11) und die Getriebeausgangswelle (12) in horizontaler Richtung betrachtet parallel in einem bestimmten Abstand zueinander angeordnet sind.

7. Hydrodynamisches 2-Gang-Turbogetriebe nach einem der Ansprüche 1 bis 6, **dadurch gekennzeichnet, daß** die Primärwellen (18, 19) mit den Ausgängen des Hochgangsatzes gekoppelt sind.

8. Hydrodynamisches 2-Gang-Turbogetriebe (1) nach Anspruch 7, **dadurch gekennzeichnet, daß** der Hochgangssatz (14) ein mit der Getriebeeingangswelle (11) drehfest verbundenes Hochgangsrad (15) und jeweils ein, mit einer Primärwelle (18, 19) drehfest verbindbares Hochgangsritzel (16, 17) umfaßt.

9. Hydrodynamisches 2-Gang-Turbogetriebe (1) nach Anspruch 8, **dadurch gekennzeichnet, daß** das einzelne Hochgangsritzel (16, 17) und die jeweilige Primärwelle (18, 19) von separaten Bauelementen gebildet werden und kraft- und/oder formschlüssig miteinander verbunden sind.

10. Hydrodynamisches 2-Gang-Turbogetriebe (1) nach Anspruch 8 oder 9, **dadurch gekennzeichnet, daß** die Verbindung zwischen dem einzelnen Hochgangsritzel (16, 17) und der jeweiligen Primärwelle (18, 19) lösbar ist.

11. Hydrodynamisches 2-Gang-Turbogetriebe (1) nach Anspruch 10, **dadurch gekennzeichnet, daß** das einzelne Hochgangsritzel (16, 17) und die jeweilige Primärwelle (18, 19) einteilig ausgeführt sind.

12. Hydrodynamisches 2-Gang-Turbogetriebe (1) nach einem der Ansprüche 7 bis 11, **gekennzeichnet durch** die folgenden Merkmale:
12.1 der Wendeschaltsatz (22) umfaßt zwei Stirnradzüge - einen ersten Stirnradzug (23) und einen zweiten Stirnradzug (24);
12.2 mit Mitteln (32) zur Realisierung der Drehrichtungsumkehr, welche die beiden Stirnradzüge (23, 24) im Traktionsbetrieb und im Reversierbetrieb miteinander verbinden.

13. Hydrodynamisches 2-Gang-Turbogetriebe (1) nach Anspruch 12, **gekennzeichnet durch** die folgenden Merkmale:
13.1 der erste Stirnradzug (23) umfaßt ein mit der zweiten Sekundärwelle (21) drehfest verbundenes Stirnrad (26) und ein mit diesem und dem Verbindungsstirnrad (25) in Eingriff stehendes Zwischenrad (27);
13.2 der zweite Stirnradsatz (24) umfaßt ein erstes koaxial zum Zwischenrad (27) des ersten Stirnradzuges (23) und ein zweites koaxial zum mit der zweiten Sekundärwelle (21) drehfest verbundenen Stirnrad (26) angeordnetes Stirnrad (28, 29), welche mit einem Zwischenrad (30), welches drehfest mit der Getriebeausgangswelle (12) gekoppelt ist, in Eingriff stehen;
13.3 mit Mitteln (32) zur Realisierung der Drehrichtungsumkehr, umfassend zwei Schiebeschaltwellen (33, 34), welche jeweils wahlweise das Zwischenrad (27) des ersten Stirnradzuges (23) und das koaxial zu diesem angeordnete Stirnrad (28) des zweiten Stirnradzuges bzw. das drehfest mit der zweiten Sekundärwelle (21) verbundene Stirnrad (25) mit dem Stirnrad (29) des zweiten Stirnradzuges (24) verbinden.

14. Antriebseinheit (39), insbesondere für den Einsatz in Unterflurantriebssystemen von Schienenfahrzeugen mit Niederfluranteil.
14.1 mit einer Antriebsmaschine (40);
14.2 mit einem mit der Antriebsmaschine (40) gekoppelten hydrodynamischen 2-Gang-Turbogetriebe (1) gemäß einem der Ansprüche 1 bis 13;
14.3 mit einem, mit einem anzutreibenden Rad koppelbaren Radsatzgetriebe (42);
14.4 die Getriebeausgangswelle (12) des hydrodynamischen 2-Gang-Turbogetriebes (1) ist über eine Gelenkwelle (41) mit einer Eingangswelle des Radsatzgetriebes (42) gekoppelt.

15. Laufwerk eines Schienenfahrzeuges mit einer Antriebseinheit (39) gemäß Anspruch 14.

## Claims

1. A hydrodynamic two-speed turbo transmission for use in underfloor drive systems of railway vehicles with a low-platform section,
1.1 with a transmission input shaft (11) and a transmission output shaft (12);
1.2 with two hydrodynamic components for forming two traction work circulations for two different speed ranges, a first hydrodynamic component in form of a hydrodynamic speed-torque converter (3) and a second hydrodynamic component in form of a hydrodynamic coupling (4);
1.3 with a high-gear shift system coupled with the transmission input shaft (11) for driving the hydrodynamic speed-torque converter (3) and the hydrodynamic coupling (4);
1.4 with the hydrodynamic speed-torque converter (3) being connected with the transmission output shaft (12) via a reversing-gear shift system (22);
1.5 with the hydrodynamic speed-torque converter (3) and the hydrodynamic coupling (4) being arranged parallel with respect to each other and free of or with only little offset in the axial direction between the transmission input shaft (11) and the transmission output shaft (12);
1.6 with the hydrodynamic speed-torque converter (3) comprising at least one pump wheel (5) which is connected with the first primary shaft (20) in a torsionally rigid way, a turbine wheel (6) which is connected with the first secondary shaft (20) in a torsionally rigid manner, and a stator (7);
1.7 with the hydrodynamic coupling (4) comprising a pump wheel (8) which is torsionally rigidly connected with a second primary shaft (19) and a turbine wheel (9) which is torsionally rigidly connected with a second secondary shaft (21);
1.8 with a hydrodynamic braking device in the form of a hydrodynamic retarder (35);
1.9 with the hydrodynamic retarder (35) being arranged in a longitudinally neutral manner in the housing (36) of the housing, i.e. it is free from any influence on the axial position of a driven flange (45) coupled with the transmission output shaft (12);
**characterized by** the following features:
1.10 the hydrodynamic coupling (4) is connected with the transmission output shaft (12) via the reversing-gear shift system (22);
1.11 the secondary shafts (20, 21) are connected with the reversing-gear shift system (22), with the first secondary shaft (20) being connected with the reversing shift gear system (22) via at least one connecting cylinder gear (25) and with the second secondary shaft being coupled directly with the reversing shift gear system (22);
1.12 with the hydrodynamic retarder being arranged co-axially to the hydrodynamic speed-torque converter.

2. A hydrodynamic two-speed turbo transmission (1) as claimed in claim 1, **characterized in that** the hydrodynamic speed-torque converter (3) and the hydrodynamic coupling (4) are arranged in a horizontal plane.

3. A hydrodynamic two-speed turbo transmission (1) as claimed in one of the claims 1 or 2, **characterized in that** the transmission input shaft (11) and the transmission output shaft (12) are arranged mutually offset in the vertical direction.

4. A hydrodynamic two-speed turbo transmission (1) as claimed in claim 3, **characterized in that** the transmission output shaft (12) is arranged, when seen in the vertical direction, between the transmission input shaft (11) and the transmission output shaft (12) above the transmission input shaft (11).

5. A hydrodynamic two-speed turbo transmission (1) as claimed in one of the claims 3 or 4, **characterized in that** the transmission input shaft (11) and the transmission output shaft (12) are substantially arranged in a common plane aligned in the vertical direction.

6. A hydrodynamic two-speed turbo transmission (1) as claimed in one of the claims 3 or 4, **characterized in that** the transmission input shaft (11) and the transmission output shaft (12) are substantially arranged, when seen in the horizontal direction, parallel at a certain distance with respect to each other.

7. A hydrodynamic two-speed turbo transmission (1) as claimed in one of the claims 1 to 6, **characterized in that** the primary shafts (18, 19) are coupled with the outputs of the high-gear shift system.

8. A hydrodynamic two-speed turbo transmission (1) as claimed in claim 7, **characterized in that** the high-gear shift system (14) comprises a high-gear wheel (15) which is connected in a torsionally rigid way with the transmission input shaft (11) and a high-gear pinion (16, 17) each which is torsionally rigidly connected with the primary shaft (18, 19).

9. A hydrodynamic two-speed turbo transmission (1) as claimed in claim 8, **characterized in that** the individual high-gear pinion (16, 17) and the respective primary shaft (18, 19) are formed by separate components and are mutually connected in a non-positive or positive way.

10. A hydrodynamic two-speed turbo transmission (1) as claimed in claim 8 or 9, **characterized in that** the connection between the individual high-gear pinion (16, 17) and the respective primary shaft (18, 19) is detachable.

11. A hydrodynamic two-speed turbo transmission (1) as claimed in claim 10, **characterized in that** the individual high-gear pinion (16, 17) and the respective primary shaft (18, 19) are provided with an integral design.

12. A hydrodynamic two-speed turbo transmission (1) as claimed in one of the claims 7 to 11, **characterized by** the following features:
12.1 the reversing-gear shift system (22) comprises two cylinder gear trains, a first cylinder gear train (23) and a second cylinder gear train (24);
12.2 with means (32) for realizing the change in direction of rotation which mutually join the two cylinder gear trains (23, 24) in traction operation and in reversing operation.

13. A hydrodynamic two-speed turbo transmission (1) as claimed in claim 12, **characterized by** the following features:
13.1 the first cylinder gear train (23) comprises a cylinder gear (26) which is torsionally rigidly connected with the second secondary shaft (21) and an intermediate wheel (27) which is in engagement with the said cylinder gear and the connecting cylinder gear (25);
13.2 the second set of cylinder gears (24) comprises a first cylinder gear (26) which is arranged coaxially to the intermediate wheel (27) of the first cylinder gear train (23) and a second cylinder gear (29) which is arranged coaxially to the cylinder gear (26) which is connected in a torsionally rigid way with the second secondary shaft (21), which cylinder gears are in engagement with an intermediate wheel (30) which is coupled in a torsionally rigid way with the transmission output shaft (12);
13.3 with means (32) for realizing the reversal in the direction of rotation, comprising two sliding gear-shift-lever shafts (33, 34) which each optionally connect the intermediate wheel (27) of the first cylinder gear train (23) and the cylinder gear (28) of the second cylinder gear train which is coaxially to the same or the cylinder gear (25) which is torsionally rigidly connected with the second secondary shaft (21) with the cylinder gear (29) of the second cylinder gear train (24).

14. A drive unit (39), especially for use in underfloor drive system of railway vehicles with a low-platform section,
14.1 with a driving machine (40);
14.2 with a hydrodynamic two-speed turbo transmission according to one of the claims 1 to 13 coupled with the driving machine (40);
14.3 with a wheel set transmission (42) which can be coupled with a wheel to be driven;
14.4 the transmission output shaft (12) of the hydrodynamic two-speed turbo transmission (1) is coupled via a cardan shaft (41) with the input shaft of the wheel set transmission (42).

15. A running gear of a railway vehicle with a driving unit (39) as claimed in claim 14.

## Revendications

1. Turbo-transmission hydrodynamique à deux vitesses destinée à être utilisée dans des systèmes d'entraînement montés sous le plancher de véhicules ferroviaires présentant une partie surbaissée,
1.1 avec un arbre d'entrée (11) et un arbre de sortie (12) de la transmission ;
1.2 avec deux composants hydrodynamiques destinés à former deux circuits de travail en traction pour deux plages de vitesses différentes, un premier composant hydrodynamique sous forme de convertisseur hydrodynamique de vitesse / de couple (3) et un deuxième composant hydrodynamique sous forme de coupleur hydrodynamique (4) ;
1.3 avec un groupe pour le rapport élevé relié à l'arbre d'entrée (11) de la transmission et destiné à entraîner le convertisseur hydrodynamique de vitesse / de couple (3) et le coupleur hydrodynamique (4) ;
1.4 le convertisseur hydrodynamique de vitesse / de couple (3) est relié à l'arbre de sortie (12) de la transmission par un groupe inverseur de marche (22) ;
1.5 le convertisseur hydrodynamique de vitesse / de couple (3) et le coupleur hydrodynamique (4) sont parallèles et disposés sans décalage ou avec un décalage minime vu selon la direction axiale entre l'arbre d'entrée (11) et l'arbre de sortie (12) de la transmission ;
1.6 le convertisseur hydrodynamique de vitesse / de couple (3) comprend au moins une pompe (5) solidarisée en rotation avec un premier arbre primaire (18), une turbine (6) solidarisée en rotation avec un premier arbre secondaire (20) et un réacteur (7) ;
1.7 le coupleur hydrodynamique (4) comprend une pompe (8) solidarisée en rotation avec un deuxième arbre primaire (19) et une turbine (9) solidarisée en rotation avec un deuxième arbre secondaire (21) ;
1.8 avec un système de freinage hydrodynamique sous forme de ralentisseur hydrodynamique (35) ;
1.9 le ralentisseur hydrodynamique (35) est disposé, neutre en longueur, dans le carter de transmission (38), c.-à-d. qu'il n'influe pas sur la position axiale d'une collerette commandée (45) reliée à l'arbre de sortie (12) de la transmission ; **caractérisée par** les dispositions suivantes :
1.10 le coupleur hydrodynamique (4) est relié à l'arbre de sortie (12) de la transmission par un groupe inverseur de marche (22) ;
1.11 les arbres secondaires (20, 21) sont reliés au groupe inverseur de marche (22),
le premier arbre secondaire (20) étant relié au groupe inverseur de marche (22) par au moins une roue cylindrique de liaison (25) et
le deuxième arbre secondaire étant relié directement au groupe inverseur de marche (22) ;
1.12 le ralentisseur hydrodynamique est disposé coaxialement par rapport au convertisseur hydrodynamique de vitesse / de couple.

2. Turbo-transmission hydrodynamique à deux vitesses (1) selon la revendication 1, **caractérisée en ce que** le convertisseur hydrodynamique de vitesse / de couple (3) et le coupleur hydrodynamique (4) sont disposés dans un plan horizontal.

3. Turbo-transmission hydrodynamique à deux vitesses (1) selon l'une quelconque des revendications 1 ou 2, **caractérisée en ce que** l'arbre d'entrée (11) et l'arbre de sortie (12) de la transmission sont décalés l'un par rapport à l'autre suivant la direction verticale.

4. Turbo-transmission hydrodynamique à deux vitesses (1) selon la revendication 3, **caractérisée en ce que**, vu dans la direction verticale entre l'arbre d'entrée (11) et l'arbre de sortie (12) de la transmission, l'arbre de sortie (12) de la transmission est disposé au-dessus de l'arbre d'entrée (11).

5. Turbo-transmission hydrodynamique à deux vitesses (1) selon l'une quelconque des revendications 3 ou 4, **caractérisée en ce que** l'arbre d'entrée (11) et l'arbre de sortie (12) de la transmission sont sensiblement disposés dans un plan commun orienté dans la direction verticale.

6. Turbo-transmission hydrodynamique à deux vitesses (1) selon l'une quelconque des revendications 3 ou 4, **caractérisée en ce que**, vu dans la direction horizontale, l'arbre d'entrée (11) et l'arbre de sortie (12) de la transmission sont parallèles et espacés d'une certaine distance.

7. Turbo-transmission hydrodynamique à deux vitesses (1) selon l'une quelconque des revendications 1 à 6, **caractérisée en ce que** les arbres primaires (18, 19) sont reliés aux sorties du groupe pour le rapport élevé.

8. Turbo-transmission hydrodynamique à deux vitesses (1) selon la revendication 7, **caractérisée en ce que** le groupe pour le rapport élevé (14) comprend une roue pour le rapport élevé (15) solidarisée en rotation avec l'arbre d'entrée (11) de la transmission et un pignon pour le rapport élevé (16, 17) respectif, adapté pour être solidarisé en rotation avec un arbre primaire (18,19).

9. Turbo-transmission hydrodynamique à deux vitesses (1) selon la revendication 8, **caractérisée en ce que** chaque pignon pour le rapport élevé (16, 17) et l'arbre primaire (18, 19) respectif sont formés par des composants distincts et sont reliés ensemble par l'intermédiaire d'une liaison positive et/ou par adhérence.

10. Turbo-transmission hydrodynamique à deux vitesses (1) selon la revendication 8 ou 9, **caractérisée en ce que** la liaison entre chacun des pignons pour le rapport élevé (16, 17) et l'arbre primaire respectif (18, 19) est amovible.

11. Turbo-transmission hydrodynamique à deux vitesses (1) selon la revendication 10, **caractérisée en ce que** chacun des pignons pour le rapport élevé (16, 17) et l'arbre primaire (18, 19) respectif ne constituent qu'une seule et même pièce.

12. Turbo-transmission hydrodynamique à deux vitesses (1) selon l'une quelconque des revendications 7 à 11, **caractérisée par** les dispositions suivantes :
12.1 le groupe inverseur de marche (22) comprend deux trains de roues cylindriques - un premier train de roues cylindriques (23) et un deuxième train de roues cylindriques (24) ;
12.2 avec des moyens (32) destinés à inverser le sens de rotation qui relient les deux trains de roues cylindriques (23, 24) en traction et en marche réversible.

13. Turbo-transmission hydrodynamique à deux vitesses (1) selon la revendication 12, **caractérisée par** les dispositions suivantes
13.1 le premier train de roues cylindriques (23) comprend une roue cylindrique (26) solidarisée en rotation avec le deuxième arbre secondaire (21) et une roue intermédiaire (27) en prise avec celle-ci et avec la roue cylindrique de liaison (25) ;
13.2 le deuxième train de roues cylindriques (24) comprend une première roue cylindrique (28) disposée coaxialement par rapport à la roue intermédiaire (27) du premier train de roues cylindriques (23) et une deuxième roue cylindrique (29) disposée coaxialement par rapport à la roue cylindrique (28) solidarisée en rotation avec le deuxième arbre secondaire (21), lesdites roues cylindriques étant en prise avec une roue intermédiaire (30) solidarisée en rotation avec l'arbre de sortie (12) de la transmission ;
13.3 avec des moyens (32) destinés à inverser le sens de rotation comprenant deux arbres de commande à coulissement (33, 34) qui relient chacun soit la roue intermédiaire (27) du premier train de roues cylindriques (23) à la roue cylindrique (28) du deuxième train de roues cylindriques disposée coaxialement par rapport à celle-ci, soit la roue cylindrique (25) solidarisée en rotation avec le deuxième arbre secondaire (21) à la roue cylindrique (29) du deuxième train de roues cylindriques (24).

14. Groupe d'entraînement (39), notamment destiné à être utilisé dans des systèmes d'entraînement montés sous le plancher de véhicules ferroviaires présentant une partie surbaissée,
14.1 avec une machine motrice (40) ;
14.2 avec une turbo-transmission hydrodynamique à deux vitesses (1) selon l'une quelconque des revendications 1 à 13 reliée à la machine motrice (40) ;
14.3 avec un engrenage d'essieu (42) adapté pour être relié à une roue qu'il y a lieu d'entraîner ;
14.4 l'arbre de sortie (12) de la turbo-transmission hydrodynamique à deux vitesses (1) est relié à un arbre d'entrée de l'engrenage d'essieu (42) par l'intermédiaire d'un arbre articulé (41).

15. Train de roulement d'un véhicule ferroviaire avec un groupe d'entraînement (39) selon la revendication 14.
